# EUROPÄISCHE PATENTANMELDUNG

(11) **EP 1 529 789 A1**
(43) Veröffentlichungstag der Anmeldung: **11.05.2005**
(21) Anmeldenummer: 04022763.9
(22) Anmeldetag: 24.09.2004
(51) Int. Cl.: C08G 18/10, C09J 175/04

(54) **Mehrkomponentenkit für PU-basierten, wassergetriebenen Leichtschaum niedriger Dichte und Sprödigkeit, diesbezügliche Verwendungen und Verfahren**

(30) Priorität: 24.10.2003 DE 10349813
(71) Anmelder: fischerwerke Artur Fischer GmbH & Co. KG, 72178 Waldachtal (DE)
(72) Erfinder: Grün, Jürgen, 79268 Bötzingen (DE); Vogel, Martin, 79286 Glottertal (DE); Jakob, Rainer, 79111 Freiburg (DE); Weber, Christian, 79312 Emmendingen (DE); Schlenk, Christian, 79211 Denzlingen (DE)

(57) **Zusammenfassung**

Mehrkomponentenkit umfassend zwei separate Komponenten, deren erste eine ein oder mehrere Polyiosocyanate beinhaltenden Komponente (a) und deren zweite eine Wasser als Treibmittelbasis beinhaltende Komponente (b) ist, ohne weitere Treibmittel zur druckfreien Herstellung eines wassergetriebenen Polyurethan-basierten Leichtschaums, wobei die Anteile der Komponenten so gewählt werden, dass der nach Mischung der Komponenten resultierende Leichtschaum nach freiem Ausschäumen eine Dichte von weniger als 28 kg/m³ hat und mindestens ein Teil der Polyisocyanate in Form von Präpolymeren vorliegt, sowie Verwendung von Isocyanat-Präpolymeren als Bestandteil einer Komponente eines Mehrkomponentensystems zur Herstellung eines wassergetriebenen Polyurethan-basierten Leichtschaumes, wobei mittels der Isocyanat-Präpolymeren eine verringerte Sprödigkeit eingestellt wird.

## Beschreibung

Die Erfindung betrifft einen Mehrkomponentenkit umfassend (mindestens) zwei separate Komponenten, deren erste eine ein oder mehrere Polyiosocyanate beinhaltenden Komponente (a) und deren zweite eine Wasser als Treibmittelbasis beinhaltende Komponente (b) ist, ohne dass weitere Treibmittel einer der Komponenten zugesetzt sind, zur druckfreien Herstellung eines wassergetriebenen Polyurethan-basierten Leichtschaums, ein Verfahren unter Verwendung eines derartigen Mehrkomponentenkits sowie die Verwendung von Isocyanat-Präpolymeren als Bestandteil einer Komponente eines Mehrkomponentensystems zur Herstellung eines wassergetriebenen Polyurethan-basierten Leichtschaumes.

Die DE 199 56 448 A1 beschreibt einen druckfrei unter Verwendung einer Zwei-Komponenten-Kartusche, die mit einem Statikmischer versehen ist, herstellbaren Zweikomponenten-Polyurethan-Montageschaum erhöhter Flammwidrigkeit, bei dessen Verbrennung das Entstehen gesundheitsschädlicher Substanzen vermieden wird. Es werden mit Wasser als Treibmittelbasis, das durch Reaktion mit Isocyanatgruppen zur Bildung des eigentlichen Treibgases Kohlendioxid führt, im Beispiel freigeschäumte Montageschäume einer Dichte von deutlich über 50 kg/m³ erhalten. Als Isocyanatkomponente werden lediglich Diphenylmethandiisocyanat-Monomere erwähnt. Die relativ hohe Dichte der resultierenden Produkte und ihre vergleichsweise hohe Härte und Sprödigkeit (Mangel an Elastizität, hohe Brüchigkeit, leichte Absplitterbarkeit) machen die resultierenden Schäume jedoch nicht für alle Zwecke optimal einsatzfähig - sie sind z.B. zur Befestigung von Türzargen geeignet, jedoch nicht als reine Füllschäume.

Für die Herstellung von Polyurethan-Leichtschäumen mit einer Dichte bis herunter zu 25 kg/m³ schlägt die DE 197 09 868 A1 vor, neben Wasser als weiteres Treibmittel Cyclopentan und damit mischbare Alkane oder Alkene mit 3 bis 4 Kohlenstoffatomen einzusetzen. Hierfür sind jedoch spezielle Geräte und Maßnahmen notwendig, alleine schon um mit dem Druck und der Feuergefährlichkeit der außer Wasser verwendeten Treibmittel umzugehen.

Eine Reihe weiterer Anmeldungen und Patente, wie die US 6,028,122, US 6,005,016, EP 1 115 771, US 5,102,923, US 4,116,893, US 4,212,954 und US 4,190,712, befasst sich mit Blockschäumen, beispielsweise für die Stoßabsorption in Form von Stoßfängern für Autos, oder mit unter Verwendung sehr spezifischer Polyamine als Bestandteil zur Wärmeisolierung verwendeten Kompositbauelementen oder mittels spezifischer heterocyclischer Polyole erhältliche Isoliermaterialien, die wassergetriebene Polyurethanschäume mit Dichten oberhalb von etwa 30 kg/m³ ergeben, aber oft in Formen oder Kompositen angewendet werden und so noch höhere Dichten ergeben.

Leichtschäume für den Baubereich, die ohne aufwändige Apparaturen auskommen, mit geringen Dichten werden umgekehrt im Stand der Technik in der Regel mit 1-Komponentensystemen hergestellt, oder mit 2-Komponentensystemen, die in Druckdosen verwendet werden, die jedoch wegen ihrer Explosionsgefahr eine Gefahr für die Anwender darstellen, und deren Inhalt ohne aufwändige Zusatzmaßnahmen vollständig auf einmal verwendet werden muss. Bei diesen Systemen liegen in der Regel nachteilig lange Härtungszeiten, z.B. von 24 bis 48 Stunden, und lange Schneidzeiten (Zeiten, ab denen beispielsweise überstehende Teile des gehärteten Schaums ohne nachfolgende weitere Dimensionsveränderungen vorgenommen werden können).

Aufgabe der vorliegenden Erfindung ist daher, neue Polyurethanbasierte Leichtschäume zur Verfügung zu stellen, die insbesondere als Füllschäume verwendbar, ergiebig, druckfrei (beispielsweise ohne Druckdose oder aufwendige Vorrichtungen) herstellbar, rein wassergetrieben und insbesondere dennoch nicht zu spröde für die praktische Anwendung sind und die Herstellung vor Ort durch auch diskontinuierliche Vermischung der Ausgangskomponenten ermöglichen, schnell schneidbar, rasch aushärtend sind oder ökologisch vorteilhafte Eigenschaften haben, oder zwei oder mehr dieser Eigenschaften haben.

Überraschend wurde nun gefunden, dass dies durch die eingangs genannten Mehrkomponenten-Kits erreichbar ist, die dadurch gekennzeichnet sind, dass die Anteile der Komponenten so gewählt werden, dass der nach Mischung der Komponenten resultierende Leichtschaum nach freiem Ausschäumen eine Dichte von weniger als 28 kg/m³ hat und mindestens ein Teil der Polyisocyanate in Form von Präpolymeren vorliegt. Es sei angemerkt, dass eine Dichte von 28 kg/m³ bedeutet, dass der resultierende Schaumstoff zu mehr als 97 % aus Gasen besteht, was die Anforderungen an die Polymerkomponente gut veranschaulicht.

Eine wichtige Basis der Erfindung ist die unerwartete Erkenntnis, dass eine neue Verwendung von Isocyanat-Präpolymeren gefunden wurde, wie eingangs erwähnt, die dadurch gekennzeichnet ist, dass mittels der Isocyanat-Präpolymeren eine gegenüber einem ohne Isocyanat-Präpolymerzusatz erhältlichen Leichtschaum verringerte Sprödigkeit eingestellt wird. Mit anderen Worten, Isocyanat-Präpolymerzusätze haben das bislang unerkannte (funktionelle) Merkmal, die Sprödigkeit bei Leichtschäumen verringern zu können, so dass diese auch bei geringer Dichte sinnvoll verwendbar sind. Ohne an diese mögliche Erklärung gebunden sein zu wollen, ist denkbar, dass bei aus monomeren Isocyanaten mit Wasser als Nebenprodukt entstehende Amine mit weiterem Isocyanat (Poly)harnstoffe bilden, die eine erhöhte Sprödigkeit bewirken, während durch die Zugabe von Isocyanat-Präpolymeren die Bildung solcher Nebenprodukte vermindert und so eine geringere Sprödigkeit erreicht wird.

Die mit einem erfindungsgemäßen Mehrkomponentenkit herstellbaren Polyurethan-basierten Leichtschäume (was im Rahmen der vorliegenden Offenbarung insbesondere Ortsschäume, wie Montageschäume, meint, im Unterschied zu Blockschäumen) erfüllen eine oder mehrere, vorzugsweise alle oben genannten Aufgaben und ermöglichen auch unter Verzicht auf die schwierig zu handhabenden Treibmittel nach DE 197 09 868 A1 und unter Verzicht auf Druckbehälter oder Mischung unter Druck die Herstellung von Leichtschäumen geringer Dichte und geringer Sprödigkeit. Ferner werden die langen Aushärtungszeiten und Schneidzeiten für 1-Komponentensysteme vermieden. Beispielsweise werden mit 1K-Montageschäumen bei Raumtemperatur Aushärtzeiten von 20 bis 30 min gefunden, mit erfindungsgemäßen Leichtschäumen von 5 min oder weniger, die dennoch die genannten weiteren vorteilhaften Eigenschaften, insbesondere geringe Sprödigkeit, haben.

Die einzeln oder zu zwei oder mehreren, zur Bestimmung möglicher bevorzugter Ausführungsformen durch die nachfolgenden spezifischere Definitionen genauer definierbaren allgemeinen Begriffe haben vorzugsweise die folgenden Bedeutungen:

Unter einem Mehrkomponentenkit umfassend (mindestens) zwei (räumlich) separate Komponenten (a) und (b), wie oben und unten definiert, ist ein solches zu verstehen, welches zwei oder mehr separate, miteinander verbundene und/oder ineinander verschachtelte Behältnisse umfasst, deren eines die Komponente (a), das andere die Komponente (b) beinhaltet, und gewünschtenfalls weitere Behältnisse mit weiteren Komponenten. Dies ermöglicht, die Komponenten (a) und (b) sowie anschließend oder vorzugsweise gleichzeitig gewünschtenfalls weitere Komponenten zur Herstellung eines wie vor- und nachstehend beschrieben erhältlichen Polyurethan-Leichtschaums am gewünschten Einsatzort so zu vermischen und erforderlichenfalls einzubringen, dass dort die Bildung des Polyurethan-Leichtschaums erfolgen kann. Daneben können weitere Behältnisse zum Mischen, wie Schüsseln oder Becher, zum Mehrkomponentenkit gehören. Bevorzugt sind Mehr-, insbesondere Zweikammer-Kartuschen für die einzusetzenden Komponenten mit ((z.B. koaxial) ineinander oder vorzugsweise (z.B. parallel) nebeneinander angeordneten) miteinander verbundenen Behältnissen mit Kammern zur separaten Aufnahme der Komponenten, beispielsweise in Kombination mit Auspressgeräten, wie Ausdrückpistolen, und/oder Statikmischern oder Düsen/Kanülen zum Auspressen.

Eine Dichte von weniger als 28 kg/m³ bedeutet in einer möglichen bevorzugten Ausführungsform der Erfindung 10 bis weniger als 28 kg/m³, z.B. insbesondere von 12 bis 25 kg/m³, wie beispielsweise insbesondere von 15 bis 22 kg/m³, jeweils nach freiem Aufschäumen (also ohne erhöhten Druck).

Wenn nicht anders angegeben, beziehen sich Gewichtsprozent (Gew.-%)-Angaben im Rahmen der vorliegenden Offenbarung stets auf das Gesamtgewicht aller Komponenten (ohne Verpackung) des erfindungsgemäßen Kits (bzw. der durch Vermischung dieser Komponenten resultierenden Mischung).

Die in der ein oder mehrere Polyisocyanate beinhaltenden Komponente (a) vorliegenden Polyisocyanat-Präpolymere sind insbesondere solche, die durch Reaktion ausgehend von Di- oder Polyisocyanaten, mit jeweils di- oder höherfunktionalen Alkoholen (Di- oder Polyolen), Aminen oder Aminoalkoholen, oder Gemischen von zwei oder mehr davon, entstehen, insbesondere wie in der WO 02/079341 genannt, die hier diesbezüglich durch Bezugnahme aufgenommen wird, vorzugsweise um aromatische Polyisocyanatpolymere basierend insbesondere auf Methandi-phenyl-4,4'diiso-cyanat (4,4'-MDI) oder technischem MDI (das weitere Isomeren umfasst); die Menge in Komponente (a) liegt beispielsweise in einer möglichen bevorzugten Ausführungsform der Erfindung bei 1 bis 80 Gew.-%, z.B. zwischen 5 und 40 Gew.-%.

Daneben können, insbesondere in einer bevorzugten Ausführungsform der Erfindung, monomere oder insbesondere mehrkernige Di- oder Polyisocyanate, wie z.B. in der WO 02/079341 genannt, die hier diesbezüglich durch Bezugnahme aufgenommen wird, in einer Komponente außer Komponente (b), vorzugsweise in Komponente (a), enthalten sein, z.B. TDI (Toluoldiisocyanat), vorzugsweise MDI oder insbesondere PMDI (Produkt von (insbesondere technischem) MDI, in dem zusätzlich zu den beiden Biphenyleneinheiten in MDI weitere Phenylreste vorliegen, was erhöhtes Molekulargewicht, höhere Viskosität und vorteilhafterweise einen geringen Dampfdruck und damit geringe gesundheitliche Belastung ermöglicht), was einerseits die Kosten senken hilft, andererseits die Einstellung hoher Isocyanatgruppenkonzentrationen pro Mol Isocyanatverbindung(en) erleichtern hilft. Der Anteil der monomeren oder mehrkernigen Di- oder Polyisocyanate liegt beispielsweise in einer möglichen bevorzugten Ausführungsform der Erfindung bis 90 Gew.-%, z.B. mit Vorteil bei 10 bis 90 Gew.-%, z.B. zwischen 30 und 70 Gew.-%.

Beispielsweise werden die monomeren und präpolymeren Isocyanate oder letztere alleine mit Vorteil in einer solchen Menge zugesetzt, dass gegenüber Amino-, Mercapto- Hydroxy- und ggf. anderen Verbindungen mit zwei oder mehr aktiven Wasserstoffatomen (s.u.) und Wasser nach der Mischung der Komponenten ein Überschuss an Isocyanatgruppen (Kennzahl > 100, z.B. 103 bis 120) vorliegt.

Die Wasser als Treibmittelbasis beinhaltende Komponente (b) beinhaltet zum einen (bezüglich der Anzahl an OH- oder Aminogruppen) bi- oder ferner höherfunktionale organische Verbindungen mit (zwei oder mehr) Amino- oder insbesondere Hydroxygruppen als funktionalen Gruppen, insbesondere di- oder höherfunktionale Amine, Aminoalkohole oder insbesondere Alkohole, wie jeweils in WO 02/079341 genannt, die hier diesbezüglich durch Bezugnahme aufgenommen wird, wobei mindestens eine Hydroxyverbindung (insbesondere in einem Gewichtsanteil von 30 bis 100 Gew.-%, beispielsweise von 75 bis 100 Gew.-%, diesmal bezogen auf die Gesamtmenge an höherfunktionellen organischen Verbindungen im Kit) beinhaltet ist, vorzugsweise um bifunktionale Polyesterpolyole, zum anderen Wasser, doch können in einer allgemeineren Ausführungsform der Erfindung die bi- oder ferner höherfunktionalen organischen Verbindungen auch zusätzlich oder alternativ in einer oder mehreren weiteren Komponenten außer (a) und (b) vorhanden sein. Der Anteil des Wassers liegt z.B. bei 0,5 bis 15 (z.B. mit Vorteil 0,5 bis 10), in einer möglichen bevorzugten Ausführungsform der Erfindung bei 1 bis 5 Gew.-%, der Anteil der bioder ferner höherfunktionalen organischen Verbindungen z.B. bei 1 bis 50, in einer möglichen bevorzugten Ausführungsform der Erfindung bei 2 bis 10 Gew.-%.

Den einzelnen Komponenten (insbesondere (a) und (b)) können noch weitere Zusätze beigemischt sein. Besonders bevorzugt sind hierbei Katalysatoren (insbesondere Komponente (b) zugesetzt), wobei ein die Reaktion zum Leichtschaum mit den gewünschten Eigenschaften besonders gut gelingt, wenn empirisch eine genaue Abstimmung der Relation von Gelkatalysatoren - z.B. auf Basis organischer Metallverbindungen (bevorzugt), beispielsweise wie in EP 0 421 269 A2 genannt, die hier diesbezüglich durch Bezugnahme aufgenommen wird, und/oder Triazinderivate, Morpholinderivate, quartäre Amine, Alkalihydroxide, Alkalialkoholate, Amidine, oder insbesondere Alkanolaminverbindungen (bevorzugt), wie Triethanolamin, oder tertiäre Amine, wie N-Methylimidazol, welche die Reaktion von Isocyanatgruppen mit Aminooder insbesondere Hydroxygruppen bi- oder ferner höherfunktionaler organischer Verbindungen mit solchen Gruppen, wie oben definiert, beschleunigen unter Bildung von Polyurethanen und Polyharnstoffen oder Gemischen oder Mischpolymeren dieser beiden - und Treibkatalysatoren - z.B. auf Basis N-substituierter Amine wie insbesondere tertiärer Amine, wie Pentamethyldiethylentriamin, welche die Geschwindigkeit des Aufschäumens regulieren - in dem Sinne erfolgt, dass Aufschäumen und Gelbildung aufeinander abgestimmt werden, so dass im Verhältnis zur Gelbildung die Gasbildung nicht zu schnell stattfindet, was zum Schrumpfen des resultierenden Schaums führen würde, andererseits die Gasbildung nicht zu langsam ist, was zu Volumenabnahme wegen Setzen führen würde. Gelkatalysatoren und Treibkatalysatoren sind beispielsweise mit Vorteil jeweils in einer Menge von 0,01 bis 8 Gew.-%, wie z.B. insbesondere 0,05 bis 5 Gew.-%, zugesetzt, beispielsweise alle zusammengenommen in einer Menge von 0,5 bis 5, z.B. mit Vorteil 1 bis 3 Gew.-%.

Eine weitere (bei einer möglichen bevorzugten Ausführungsform der Erfindung anzufindende) Feinabstimmung kann durch Zumischung von Schaumstabilisatoren (insbesondere in Komponenten (a) und (b)), wie Copolymeren aus Polyether/Polysiloxan, insbesondere solchen, die nicht mit Isocyanatgruppen reagieren, und weiter speziellen Schaummodifikatoren (insbesondere in Komponente (b)), die schaumstabilisierende und zellöffnende oder rein zellöffnende Eigenschaften haben (und so z.B. den Austausch des gebildeten CO₂ mit Luft ermöglichen ohne dass beim fertigen Schaum Volumenänderungen durch unterschiedliche Ein- und Ausdiffusionsgeschwindigkeiten der Gase innerhalb und außerhalb der Poren hervorgerufen werden), z.B. organische Silikon-Copolymere, beispielsweise auf Basis von Polydialkyl(wie -methyl-)-siloxan-polyether-Copolymere, erfolgen, was auch die Reaktionskontrolle angesichts der Exothermie der Reaktion verbessert. Schaumstabilisatoren können beispielsweise vorteilhaft jeweils in einer Menge von 0,1 bis 10, wie insbesondere von insgesamt 2 bis 6 Gew.-% zugesetzt sein, Schaummodifikatoren in einer Menge von jeweils 0,1 bis 10, z.B. mit Vorteil von 1 bis 5 Gew.-%.

Weiter können, beispielsweise in Anteilen bis jeweils 15 Gew.-% viskositätsmodifizierende (z.B. erhöhende) Stoffe, wie (z.B. pyrogenes) Siliciumdioxid (Kieselsäure) (insbesondere in Komponente (b)), beispielsweise mit Vorteil in einer Menge von 0,1 bis 8, z.B. von 1 bis 5 Gew.-%; hydrophobisierte pyrogene Kieselsäure (insbesondere in Komponente (a), da vor allem wenig aktiven Wasserstoff enthaltend), beispielsweise vorteilhaft in einer Menge von 0,2 bis 10, z.B. von 1 bis 6 Gew-%; Isocyanat-Trimerisierungskatalysatoren (nicht in Komponente (a), insbesondere in Komponente (b); sind bei einer bevorzugten Ausführungsform zwingend vorhanden, um gute Quervernetzung zu erhalten), die zur Isocyanuratbildung führen, beispielsweise mit Vorteil in einer Menge von 0,001 bis 2 Gew.-%, z.B. von 0,01 bis 1 Gew.-%, z.B. Amine, Phosphine, Alkoholate, Metalloxide, metallorganische Verbindungen, Metall-Chelate, organisch-anorganische Säuren, Amin-Epoxide, Amin-Alkylencarbonate, Amin-Imide oder insbesondere Metallcarboxylate, wie Alkalimetallsalze von Carbonsäuren, z.B. Kaliumoctanoat, oder 1,4-Diazabicyclo[2.2.2]octan; Netz- und/oder Dispergiermittel (insbesondere in Komponente (b)), z.B. auf Block-Copolymerbasis (die auch aminogruppenhaltig sein können), beispielsweise mit Vorteil in einer Menge von 0,01 bis 4, z.B. von 0,05 bis 1 Gew.-%; Flammschutzmittel und/oder Weichmacher, z.B. Organo- oder Haloorganophosphate, wie Tris(2-chlorisopropyl)phosphat (vorzugsweise in Komponente (a)), beispielsweise mit Vorteil in einer Menge von 0,1 bis 15, z.B. von 1 bis 12 Gew.-%; oder Gemische von zwei oder mehr dieser Zusätze zugemischt sein.

Daneben können andere, vorzugsweise inerte Zusätze vorhanden sein, beispielsweise Farbstoffe, Pigmente, UV-Stabilisatoren, Biozide (wie Fungizide oder Antibiotika), Füllstoffe, wie Blähgraphit oder Hohlglaskugeln oder dergleichen, beispielsweise in einer Menge von insgesamt bis zu 5 Gew.-%.

"Ohne dass weitere Treibmittel einer der Komponenten zugesetzt sind" bedeutet: Keine weiteren Treibmittel, wie leichtflüchtige Kohlenwasserstoffe oder haloorganische Verbindungen, außer dem Wasser, das als Treibmittelbasis durch Reaktion mit Isocyanatgruppen das eigentlich treibend wirkende Kohlendioxid bilden, sind zugesetzt.

"Druckfreie Herstellung" bedeutet, dass die Mischung und Umsetzung der Komponenten in direktem Kontakt mit der Erdatmosphäre stattfinden kann, ohne dass ein besonderes Druckgefäß (wie eine Druckdose) erforderlich ist.

"Wassergetrieben" bedeutet, dass außer durch Gegenwart von Wasser als Treibmittelbasis in Komponente (b) gebildetem Kohlendioxid kein weiteres Treibmittel zugesetzt ist.

Verwendung von Isocyanat-Präpolymeren als Bestandteil einer Komponente eines Mehrkomponentensystems zur Herstellung eines wassergetriebenen Polyurethan-basierten Leichtschaumes (insbesondere geringe Dichte und Sprödigkeit) bedeutet, dass die zugesetzten Isocyanat-Präpolymere eine gegenüber einem entsprechenden Leichtschaum, der ohne Gegenwart von Isocyanat-Präpolymeren (nur mit Isocyanat-Monomeren) hergestellt wird, verringerte Sprödigkeit aufweist.

Dies kann nach üblichen Verfahren, beispielsweise wie folgt getestet werden: Aufgeschäumte Proben werden unter einem Fallrohr platziert. Gewichte zunehmender Masse werden durch das Fallrohr auf die Proben fallengelassen. Die Masse, ab der sich im Schaum bleibende Verformungen und insbesondere Brüche an der Oberfläche zeigen, wird notiert. Bei aus erfindungsgemäßen Mehrkomponentenkits stammenden Proben kann gezeigt werden, dass im Vergleich mit Proben ohne Isocyanat-Präpolymere die Verformungen oder Brüche erst bei relativ hohen Gewichten gefunden werden.

Auch durch einfachen Fingerdruck kann geprüft werden, ob Sprödigkeit vorliegt: Mit erfindungsgemäßen Kits hergestellte Proben kann hier ein gutes elastisches Verhalten, weniger (oft keine) Brüchigkeit und weniger (oft keine) Absplitterbarkeit, im Vergleich zu Proben ohne Isocyanat-Präpolymere gezeigt werden.

Vorzugsweise findet die Verwendung statt, indem hierzu das oder die Isocyanat-Präpolymeren Bestandteil eines Zweikomponenten-Kits sind, wie oben oder nachfolgend beschrieben, beispielsweise mit Vorteil in einer der dafür als bevorzugt gekennzeichneten Ausführungsformen.

So bezieht sich ein Aspekt der Erfindung auch auf ein Verfahren zur druckfreien Herstellung eines wassergetriebenen Polyurethan-basierten Leichtschaums mit einer Dichte von weniger als 28 kg/m³, beispielsweise mit Vorteil einer der oben als bevorzugt genannten Dichten, dadurch gekennzeichnet, dass ein Mehrkomponenten-Kit wie oben und nachfolgend beschrieben eingesetzt wird, beispielsweise unter Mischen der Komponenten und Einfüllen des resultierenden Gemischs in auszufüllende Hohlräume oder Auftragen auf zu überschäumende Oberflächen, sowie auf die Verwendung eines derartigen Mehrkomponentenkits zur druckfreien Herstellung von wie oben und nachfolgend charakterisierten Polyurethan-basierten Leichtschäumen.

Bevorzugte Ausführungsformen der Erfindung ergeben sich auch aus den Unteransprüchen, die hier durch Bezugnahme aufgenommen werden; besonders bevorzugt sind die in den Beispielen genannten Komponenten, vorzugsweise die mit den entsprechenden Warenzeichen benannten, insbesondere in den in den Beispielen genannten Mengenverhältnissen.

Die nachfolgenden Beispiele dienen der Erläuterung der Erfindung, ohne ihren Umfang einzuschränken:

### Beispiel 1: Zweikammerkartusche mit Komponenten für einen wassergetriebenen Polyurethan-Leichtschaum

Jeweils eine Kammer einer Zweikammerkartusche, deren Kammern ein Volumenverhältnis von 1 : 5 aufweisen, wird mit einer der folgenden Komponenten zur Herstellung eines Polyurethan-Leichtschaums gefüllt:

| Komponente (A): Polyiosocyanate beinhaltenden Komponente | | | | | | |
|---|---|---|---|---|---|---|
| Eingesetzte Rohstoffe | | Menge (g) | Menge (Gew.-%) | Anteil (a)+(b) (Gew.-%) | n(NCO) (mmol) | Volumen (ml) |
| Warenzeichen/Bezeichnung | Inhalt | | | | | |
| Desmodur 44 V 70 L (Bayer Polymer AG, Deutschland??) | PMDI | 441,00 | 63,00 | 53,17 | 3255,00 | 358,54 |
| Wacker HDK H 18 (Wacker-Chemie, Deutschland) | pyrogenes hydrophobes Siliciumdioxid, hergestellt durch Reaktion von Siliciumdioxid mit Polydimethylsiloxan | 24,50 | 3,50 | 2,95 | | 9,42 |
| Tegostab B 8407 (Degussa, Deutschland) | Schaumstabilisator, nicht reaktiv mit NCO (Silikonpolyether) | 24,50 | 3,50 | 2,95 | | 23,11 |
| Fyrol PCF (Akzo Nobel, Niederlande) | Flammschutzmittel und Weichmacher: Tris(2-chlorisopropyl)phosphat | 70,00 | 10,00 | 8,44 | | 54,26 |
| Desmodur E 23 (Bayer AG, Deutschland) | Aromatisches Polyisocyanat-polymer basierend auf MDI | 140,00 | 20,00 | 16,88 | 123,89 | 0,700 |
| 5 Volumenanteile dieser Komponente (A) (300,00 ml = 357 g) werden in die größere Kammer einer Zweikammerkartusche mit Statikmischer eingefüllt. | | | | | | |

| Komponente (B): Polyol/Wasserkomponente | | | | | | |
|---|---|---|---|---|---|---|
| Eingesetzte Rohstoffe | | Menge (g) | Menge (Gew.-%) | Anteil (a)+(b) (Gew.-%) | OH-Zahl/n(H₂O) (mmol) | Volumen (ml) |
| Warenzeichen /Bezeichnung | Inhalt | | | | | |
| Desmophen PU 1431 (Bayer AG, Deutschland) | bifunktionales Polyesterpolyol, Viskosität 6500 mPa x sec | 32,00 | 32,00 | 4,99 | 300/7,47 | 26.02 |
| CAPA 4101 (Solvay, Deutschland) | tetrafunktionales Polyesterpolyol mit primären Hydroxygruppen an den Enden Viskosität 260 mPa x sec | 20,00 | 20,00 | 3,12 | 218/ 0,22 | 20,00 |
| Triethanolamin (rein) | Triethanolamin | 5,00 | 5,00 | 0,78 | 1128/0,44 | 4,46 |
| Disperbyk-185 (Byk-Chemie, Altana, Deutschland) | Block-Copolymeres Netz und Dispergiermittel, Aminzahl 18 mg KOH/g | 1,00 | 1,00 | 0,16 | 18/ - | 0,88 |
| demineralisiertes Wasser | Wasser | 21,50 | 21,50 | 3,35 | -/ 1194,44 | 21,50 |
| Cab-O-Sil M5 (Cabot, USA) | amorphes pyrogenes Siliciumdioxid | 4,00 | 4,00 | 0,62 | -/ - | 1,54 |
| DABCO K 15 (Air Products and Chemicals, Inc, | Kaliumoctanoat in Diethylenglykol | 0,50 | 0,50 | 0,08 | -/ | 0,44 |
| Polycat 5 (Air Products and Chemicals, Inc.) | Pentamethyldiethylentriamin (Triebkatalysator) | 7,00 | 7,00 | 1.09 | -/ - | 8,24 |
| RC PUR Aktivator 102 (Rheinchemie, Deutschland) | Gelkatalysator auf tertiär-Amin-Basis | 0,50 | 0,50 | 0,08 | -/ 0,03 | 0,50 |
| Tegostab B 8460 (Degussa, Deutschland) | Schaumstabilisator auf Silikon-Polyetherbasis | 6,00 | 6,00 | 0,94 | -/ 0,40 | 5,66 |
| Niax Stabilisator L 6164 (General Electrics Silicons OSI | schaumstabilisierendes und zellöffnendes organisches Silikon- | 2,50 | 2,50 | 0,39 | -/ 0,08 | 2,67 |
| Specialities) | Copolymer | | | | | |
| Gesamtvolumen 91,91 ml, n(H₂O) gesamt = 1203,09 mmol | | | | | | |
| 1 Volumenanteil (60,00 ml = 66,00 g) dieser Komponente (B) wird in die kleinere Kammer einer Zweikammerkartusche mit Statikmischer eingefüllt. | | | | | | |

### Beispiel 2: Polyurethan-Leichtschaumherstellung unter Verwendunq eines Komponentengemisches/einer Kartusche nach Beispiel 1:

Die aus der Mischung der beiden Komponenten (A) und (B) aus Beispiel 1 mit Hilfe des Statikmischers resultierende polyurethanleichtschaumbildende Mischung (Isocyanat-Kennzahl 105,6; c(OH) 3,50 mmol/g; c(H₂O) 12,03 mmol/g; c(NCO) 5,38 mmol/g) wird mit Hilfe des Statikmischers auf eine Unterlage aufgebracht. Der resultierende Schaum hat eine Dichte von 20 kg/m³ und eine Druckfestigkeit von 3 N/cm² nach DIN 53421.

Beispiele ohne Isocyanat-Präpolymere zeigen höhere Sprödigkeit.

## Patentansprüche

1. Mehrkomponentenkit umfassend zwei separate Komponenten, deren erste eine ein oder mehrere Polyisocyanate beinhaltenden Komponente (a) und deren zweite eine Wasser als Treibmittelbasis beinhaltende Komponente (b) ist, ohne dass weitere Treibmittel einer der Komponenten zugesetzt sind, zur druckfreien Herstellung eines wassergetriebenen polyurethan-basierten Leichtschaums, **dadurch gekennzeichnet, dass** die Anteile der Komponenten so gewählt werden, dass der nach Mischung der Komponenten resultierende Leichtschaum nach freiem Ausschäumen eine Dichte von weniger als 25 kg/m³ hat und mindestens ein Teil der Polyisocyanate in Form von Präpolymeren vorliegt.

2. Mehrkomponentenkit nach Anspruch 1, ausgebildet als Zweikomponentenkit, wobei Komponente (b) neben Wasser bi- oder ferner höherfunktionale organische Verbindungen mit (zwei oder mehr) Amino- oder insbesondere Hydroxygruppen als funktionalen Gruppen beinhaltet und die Dichte vorzugsweise bei 10 bis weniger als 28 kg/m³, insbesondere von 12 bis 25 kg/m³, mit Vorteil von 15 bis 22 kg/m³ liegt.

3. Mehrkomponentenkit nach einem der Ansprüche 1 oder 2, weiter beinhaltend (insbesondere in Komponente (b)) einen oder mehrere Gelkatalysatoren, z.B. auf Basis von tertiären Aminen und/oder Alkanolaminen, und einen oder mehrere Treibkatalysatoren, z.B. auf Basis N-substituierter Amine.

4. Mehrkomponentenkit nach einem der Ansprüche 1 bis 3, weiter beinhaltend ein oder mehrere Schaumstabilisatoren (insbesondere in Komponente (a) und Komponente (b)), vorzughsweise Copolymeren aus Polyether/Polysiloxan, und ein oder mehrere schaumstabilisierende und zellöffnende oder zellöffnende Schaummodifikatoren (insbesondere in Komponente (b)), vorzugsweise Silikon-Copolymer.

5. Mehrkomponentenkit nach einem der Ansprüche 1 bis 4, weiter beinhaltend ein oder mehrere weitere Zusätze, insbesondere viskositätsmodifizierende Zusätze (insbesondere in Komonente (b)), vorzugsweise Siliciumdioxid; ein oder mehrere hydrophobisierte pyrogene Kieselsäure (insbesondere in Komponente (a)); einen oder mehrere Isocyanat-Trimerisierungskatalysatoren (insbesondere in Komponente (b)), vorzugsweise Carboxylate; und gewünschtenfalls Netz- und Dispergiermittel (insbesondere in Komponente (b)), vorzugsweise auf Block-Copolymerenbasis; Flammschutzmittel und/oder Weichmacher (insbesondere in Komponente (a)), vorzugsweise Organo- oder Haloorganophosphate; sowie ferner andere Zusätze, insbesondere ausgewählt aus Farbstoffen, Pigmenten, UV-Stabilisatoren, Bioziden und Füllstoffen.

6. Zweikomponenten-Kit nach einem der Ansprüche 1 bis 5, beinhaltend, bezogen jeweils auf das Gesamtgewicht aller Komponenten, in Komponente (a) Polyisocyanat-Präpolymere in einem Anteil von 1 bis 80 Gew.-%, insbesondere zwischen 5 und 40 Gew.-%; vorzugsweise monomere Di- oder Polyisocyanate in einem Anteil bis zu 90 Gew.-%, mit Vorteil von 10 bis 90 Gew.-%, insbesondere zwischen 30 und 70 Gew.-%; sowie in Komponente (b) Wasser in einem Anteil von 0,5 bis 15, insbesondere bei 1 bis 5 Gew.-%, bioder höherfunktionale Verbindungen mit Amino- oder insbesondere Hydroxygruppen in einem Anteil von 1 bis 50, vorzugsweise von 2 bis 10 Gew.-% und Isocyanat-Trimerisierungskatalysatoren in einer Menge von 0,001 bis 2, vorzugsweise von 0,01 bis 1 Gew.-%; und, jeweils in den in Anspruch 4 oder 5 als bevorzugt angegebenenen Komponenten, Gelkatalysatoren und Treibkatalysatoren in einem Anteil von jeweils 0,1 bis 8 Gew.-%, insbesondere von jeweils 0,05 bis 5 Gew.-%, Schaumstabilisatoren in einem Anteil von 0,1 bis 10, insbesondere von 2 bis 6 Gew.-%, Schaummodifikatoren in einem Anteil von 0,1 bis 10, vorzugsweise von 1 bis 5 Gew.-%, viskositätsmodifizierende Zusätze in einer Menge von 0,1 bis 8, z.B. von 1 bis 5 Gew.-%, hydrophobisierte pyrogene Kieselsäure in einer Menge von 0,2 bis 10, insbesondere von 1 bis 6 Gew.-%, Netz- oder Dispergiermittel in einem Anteil von 0,01 bis 4, insbesondere von 0,05 bis 1 Gew.-%, und Flammschutzmittel und/oder Weichmacher in einer Menge von 0,1 bis 15, insbesondere von 1 bis 12 Gew.-%; sowie gewünschtenfalls weitere Zusätze in einer Menge von insgesamt bis zu 5 Gew.-%.

7. Verwendung von Isocyanat-Präpolymeren als Bestandteil einer Komponente eines Mehrkomponentensystems zur Herstellung eines rein wassergetriebenen Polyurethan-basierten Leichtschaumes durch Mischung der Komponenten, **dadurch gekennzeichnet, dass** mittels Zusatz von Isocyanat-Präpolymeren eine gegenüber einem ohne Isocyanat-Präpolymerzusatz erhältlichen Leichtschaum verringerte Sprödigkeit eingestellt wird.

8. Verwendung nach Anspruch 6, wobei die Verwendung mittels einem Mehr-, insbesondere Zweikomponentenkit nach einem der Ansprüche 1 bis 7 erfolgt.

9. Verfahren zur druckfreien Herstellung eines wassergetriebenen Polyurethan-basierten Leichtschaums mit einer Dichte von weniger als 28 kg/m³, **dadurch gekennzeichnet, dass** ein Mehrkomponenten-Kit wie in einem der Ansprüche 1 bis 7 definiert zum Mischen der Komponenten und Einfüllen des resultierenden Gemischs in auszufüllende Hohlräume oder Auftragen auf zu überschäumende Oberflächen verwendet wird.
